# EUROPEAN PATENT APPLICATION

(11) **EP 2 608 359 A2**
(43) Date of publication of application: **26.06.2013**
(21) Application number: 12171780.5
(22) Date of filing: 13.06.2012
(51) Int. Cl.: H02K 1/14, H02K 19/10

(54) **Switched reluctance motor**

(30) Priority: 23.12.2011 KR 20110141317
(71) Applicant: Samsung Electro-Mechanics Co., Ltd, Suwon Gyunggi-do 443-743 (KR)
(72) Inventor: Yang, Hae Jun, 443-743 Gyunggi-do (KR); Lee, Ki Young, 443-743 Gyunggi-do (KR); Kim, Se Joo, 443-743 Gyunggi-do (KR); Jung, Sung Tai, 443-743 Gyunggi-do (KR); Yim, Jung Kyu, 443-743 Gyunggi-do (KR)
(74) Representative: Heine, Christian Klaus

(57) **Abstract**

Disclosed herein is a switched reluctance motor including: a rotor part including a rotor core having a shaft inserted thereinto and a plurality of rotor poles formed to be protruded from the rotor core; a stator part formed by coupling stator cores each positioned at outer sides of the rotor poles while facing the rotor poles so that the rotor part rotates therein and independently manufactured by insert injection molding to each other; and a magnet coupled between the stator cores.

## Description

### BACKGROUND OF THE INVENTION

### 1. Technical Field

The present invention relates to a switched reluctance motor.

### 2. Description of the Related Art

Recently, the demand for a motor has largely increased in various industries such as vehicles, aerospace, military, medical equipment, or the like.

In particular, a cost of a motor using a permanent magnet is increased due to the sudden price increase of a rare earth material, such that a switched reluctance (SR) motor has again become prominent as a new alternative.

A driving principle of the switched reluctance motor rotates a rotor using a reluctance torque generated according to a change in magnetic reluctance.

In a general switched reluctance motor, both of a stator and a rotor have a magnetic structure, which is a salient pole, and a concentrated type coil is wound around the stator salient pole.

The rotor is configured only of an iron core without any type of excitation device (a winding, a permanent magnet, or the like).

In addition, a shaft transferring driving force of the motor to the outside is coupled to the center of the rotor to thereby rotate together with the rotor.

This speed changeable switched reluctance motor stably generates a continuous reluctance torque with the aid of a converter using a power semiconductor and a sensor sensing a position of a rotor.

The stator includes a magnet coupled to an outer peripheral surface thereof in order to improve the reluctance torque. In this case, the magnet is fixedly coupled to the stator and the coil is then wound around the stator salient pole.

Therefore, when current flows in the coil from the outside, a reluctance torque moving the rotor toward the stator salient pole having the coil wound therearound by magnetic force generated from the coil is generated.

That is, the rotor rotates in a direction in which resistance of a magnetic circuit is minimized.

The reluctance torque is improved by the magnet coupled to the stator. According to the prior art, the magnet is fixedly coupled to the stator and the coil is then wound around the stator salient pole.

However, a manufacturing process of fixedly coupling the magnet to the stator and then winding the coil around the stator salient pole is significantly complicated.

Therefore, a yield of a manufacturing process of a switched reluctance motor is decreased, and a manufacturing cost thereof is also increased.

### SUMMARY OF THE INVENTION

The present invention has been made in an effort to provide a switched reluctance motor including a separated stator core having a magnet coupled to an outer peripheral surface thereof.

According to a preferred embodiment of the present invention, there is provided a switched reluctance motor including: a rotor part including a rotor core having a shaft inserted thereinto and a plurality of rotor poles formed to be protruded from the rotor core; a stator part formed by coupling stator cores each positioned at outer sides of the rotor poles while facing the rotor poles so that the rotor part rotates therein and independently manufactured by insert injection molding to each other; and a magnet coupled between the stator cores.

The stator core may include: a stator yoke; a stator central salient pole formed to be protruded from the center of the stator yoke so as to face the rotor pole; and stator outer salient poles each formed to be protruded from one end and the other end of the stator yoke so as to face the rotor pole.

Each of the stator outer salient poles may include a step part formed to be extended toward a stator core adjacent to the stator core.

The step part of the stator outer salient pole and the step part of the stator outer salient pole adjacent thereto may be coupled to each other to form a magnet receiving part.

The stator central salient pole may include a coil wound therearound.

The stator part may include six stator cores formed to have the same shape by the insert injection molding.

### BRIEF DESCRIPTION OF THE DRAWINGS

FIG. 1 is a schematic cross-sectional view of a switched reluctance motor according to a preferred embodiment of the present invention;
FIG. 2 is a partially enlarged view of a stator core configuring the switched reluctance motor shown in FIG. 1;
FIG. 3 is a graph showing an output torque of a switched reluctance motor according to the prior art; and
FIG. 4 is a graph showing an output torque of a switched reluctance motor according to the preferred embodiment of the present invention.

### DESCRIPTION OF THE PREFERRED EMBODIMENTS

Various objects, advantages and features of the invention will become apparent from the following description of embodiments with reference to the accompanying drawings. In the specification, in adding reference numerals to components throughout the drawings, it is to be noted that like reference numerals designate like components even though components are shown in different drawings. Further, terms used in the specification, 'first', 'second', etc. can be used to describe various components, but the components are not to be construed as being limited to the terms. The terms are only used to differentiate one component from other components. Further, when it is determined that the detailed description of the known art related to the present invention may obscure the gist of the present invention, the detailed description thereof will be omitted.

Hereinafter, preferred embodiments of the present invention will be described in detail with reference to the accompanying drawings.

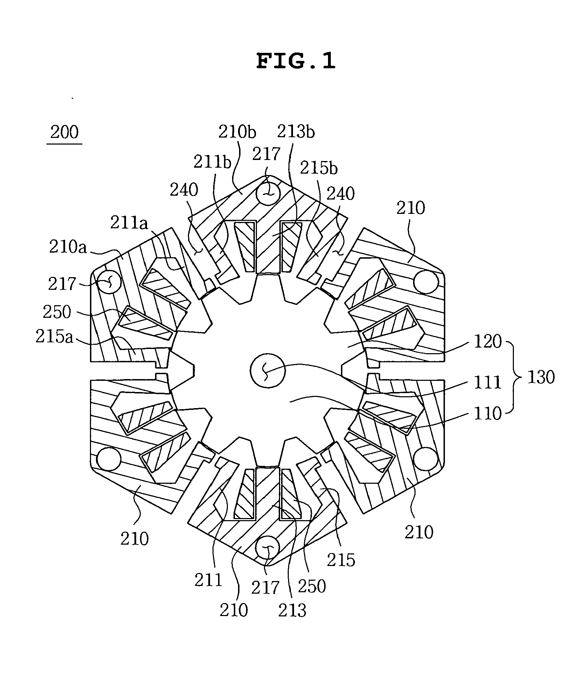

FIG. 1 is a schematic cross-sectional view of a switched reluctance motor according to a preferred embodiment of the present invention.

As shown, the switched reluctance motor is configured to include a rotor part 100, a stator part 200, and a magnet.

The rotor part 100 includes a rotor core 110 and a plurality of rotor poles 120.

In addition, the rotor core 110 includes a shaft fixedly inserted into the center thereof in order to transfer rotational force of the rotor part 100 to the outside.

Further, the rotor pole 120 is formed to be protruded from an outer peripheral surface of the rotor core 110.

In addition, each of the rotor core 110 and the plurality of rotor poles 120 that configure the rotor part 100 according to the preferred embodiment of the present invention may be formed of a metal material.

The stator part 200 according to the preferred embodiment of the present invention is formed by coupling a plurality of stator cores 210 independently manufactured by insert injection molding to each other.

In addition, each of the stator cores 210 is positioned at an outer side of the rotor pole 120 while facing the rotor pole 120 so that the rotor part 100 may rotate therein.

More specifically, the stator core 210 includes a stator yoke, a stator central salient pole 213, and stator outer salient poles 211 and 215.

In addition, all of the stator yoke, the stator central salient pole 213, and the stator outer salient poles 211 and 215 may be formed of a metal material.

As shown in FIG. 1, the stator yoke includes a coupling part 217 formed on an outer peripheral surface thereof, wherein the coupling part 217 is coupled to a printed circuit board on which electrical devices are mounted.

The stator central salient pole 213 is formed to be protruded from the center of the stator yoke so as to face the rotor pole 120.

The stator outer salient pole 211 is formed to be protruded from one end of the stator yoke.

In addition, the stator outer salient pole 215 is formed to be protruded from the other end of the stator yoke.

Therefore, each of the stator cores 210 includes three stator salient poles facing the rotor pole 120.

In addition, each of the stator outer salient poles 211 and 215 includes a step part directed toward other stator outer salient poles 211 and 215 adjacent thereto.

More specifically, the stator outer salient pole 211a configuring a stator core 210a, which is one of the plurality of stator cores according to the preferred embodiment of the present invention shown in FIG. 1, includes a step part 212a formed to be extended toward another stator core 210b adjacent thereto.

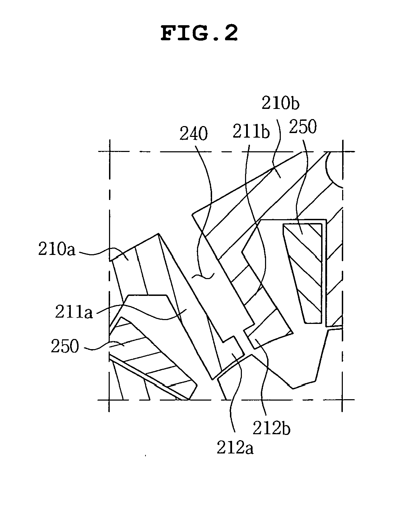

As shown in FIG. 2, which is a partially enlarged view of a stator core configuring the switched reluctance motor according to the preferred embodiment of the present invention, the step part 212a provided in the stator outer salient pole 211a and a step part 212b provided in another stator outer salient pole 211 adjacent thereto is coupled to each other.

Therefore, the step part 212a of the stator outer salient pole 211a and the step part 212b of another stator outer salient pole 211b are coupled to each other to form a magnet insertion part 240.

The magnet, which is to improve a reluctance torque of the switched reluctance motor according to the preferred embodiment of the present invention, is fixedly coupled to the magnet insertion part 240.

Therefore, even after a coil 250 to which power is applied from the outside is wound around the stator central salient pole 213 of the stator core 210, the magnet may be coupled to the stator part 200.

On the other hand, after the magnet is fixedly coupled to the magnet insertion part 240, the coil 250 may be wound around the stator central salient pole 213 of the stator core 210.

In addition, in order to improve coupling force of the magnet fixedly coupled to the magnet insertion part 240, an adhesive may be applied to outer peripheral surfaces of the stator outer salient pole 211a and the step part 212a and outer peripheral surfaces of the stator outer salient pole 211b and the step part 212b.

Therefore, a manufacturing process of the switched reluctance motor is simplified and a yield of the manufacturing process thereof is improved.

In addition, the coupling force of the magnet is increased, such that durability of the switched reluctance motor according to the preferred embodiment of the present invention is improved.

In addition, when a malfunction occurs due to a damage of the magnet or the stator core 210 during driving of the switched reluctance motor, the damaged magnet or stator core may be easily replaced.

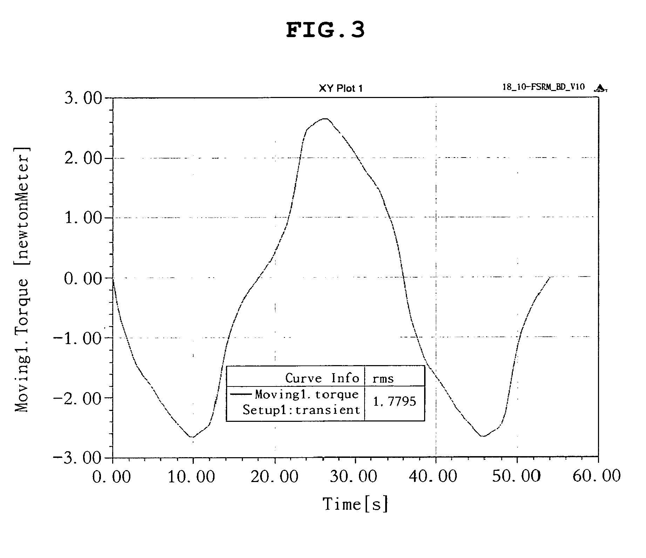

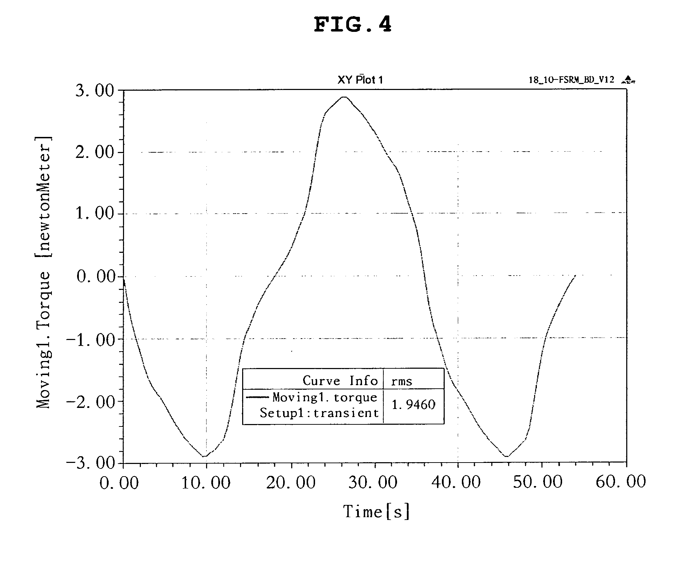

FIG. 3 is a graph showing an output torque of a switched reluctance motor according to the prior art; and FIG. 4 is a graph showing an output torque of a switched reluctance motor according to the preferred embodiment of the present invention.

As shown, in the case in which current of 5 A is applied to the switched reluctance motor according to the prior art including an integral stator part, a torque of 1.77 Nm is generated.

On the other hand, in the case in which current of 5 A is applied to the switched reluctance motor according to the preferred embodiment of the present invention including the stator part 200 configured of stator cores 210 independently manufactured by the insert injection molding, a torque of 1.95 Nm is generated, which is increased as compared to the prior art by 10 %.

As set forth above, according to the preferred embodiment of the present invention, the stator cores having the same shape are independently manufactured by the insert injection molding, thereby making it possible to simplify a manufacturing process of a switched reluctance motor and reduce a manufacturing cost thereof.

In addition, since the magnet may be inserted after the coil is wound around the stator core, a yield of a manufacturing process of a switched reluctance motor may be improved.

Although the preferred embodiments of the present invention have been disclosed for illustrative purposes, they are for specifically explaining the present invention and thus a switched reluctance motor according to the present invention is not limited thereto, but those skilled in the art will appreciate that various modifications, additions and substitutions are possible, without departing from the scope and spirit of the invention as disclosed in the accompanying claims.

Accordingly, any and all modifications, variations or equivalent arrangements should be considered to be within the scope of the invention, and the detailed scope of the invention will be disclosed by the accompanying claims.

## Claims

1. A switched reluctance motor comprising:
a rotor part including a rotor core having a shaft inserted thereinto and a plurality of rotor poles formed to be protruded from the rotor core;
a stator part formed by coupling stator cores each positioned at outer sides of the rotor poles while facing the rotor poles so that the rotor part rotates therein and independently manufactured by insert injection molding to each other; and
a magnet coupled between the stator cores.

2. The switched reluctance motor as set forth in claim 1, wherein the stator core includes:
a stator yoke;
a stator central salient pole formed to be protruded from the center of the stator yoke so as to face the rotor pole; and
stator outer salient poles each formed to be protruded from one end and the other end of the stator yoke so as to face the rotor pole.

3. The switched reluctance motor as set forth in claim 2, wherein each of the stator outer salient poles includes a step part formed to be extended toward a stator core adjacent to the stator core.

4. The switched reluctance motor as set forth in claim 3, wherein the step part of the stator outer salient pole and the step part of the stator outer salient pole adjacent thereto are coupled to each other to form a magnet receiving part.

5. The switched reluctance motor as set forth in claim 2, wherein the stator central salient pole includes a coil wound therearound.

6. The switched reluctance motor as set forth in claim 1, wherein the stator part includes six stator cores formed to have the same shape by the insert injection molding.
